Europäisches Patentamt

European Patent Office

Office européen des brevets

(19)

(11) Numéro de publication: **0 004 233**
**B1**

(12) **FASCICULE DE BREVET EUROPEEN**

(45) Date de publication du fascicule du brevet: **17.02.82**

(51) Int. Cl.³: **G 05 D 23/24, H 03 B 1/02**

(21) Numéro de dépôt: **79400134.7**

(22) Date de dépôt: **02.03.79**

(54) **Dispositif de régulation thermique d'une enceinte, contenant un cristal piezoélectrique oscillant.**

(30) Priorité: **03.03.78 FR 7806100**

(43) Date de publication de la demande:
**19.09.79 Bulletin 79/19**

(45) Mention de la délivrance du brevet:
**17.02.82 Bulletin 82/7**

(84) Etats contractants désignés:
**DE GB NL**

(56) Documents cités:
**US - A - 3 028 473**
**US - A - 3 409 757**
**US - A - 3 395 265**
**US - A - 3 482 776**

**Electronic Engineering, vol. 46
no. 557, juillet 1974
Londres
Applied Ideas
Temperature stabiliser for small
components, page 19**

(73) Titulaire: **COMPAGNIE D'ELECTRONIQUE ET DE
PIEZOELECTRICITE - C.E.P.E.
101, rue du Président Roosevelt
F-78500 Sartrouville (FR)**

(72) Inventeur: **Marotel, Gérard
"THOMSON-CSF" - SCPI 173, bld Haussmann
F-75360 Paris Cedex 08 (FR)**

(74) Mandataire: **Favre, Maurice et al,
"THOMSON-CSF" - SCPI 173, bld Haussmann
F-75360 Paris Cedex 08 (FR)**

(56) Documents cités:
**IEE Transactions on parts,
Hybrids, and Packaging, vol.
PHP—10, no. 2, Juin 1974
New York
H.M. Greenhouse et al.: "Design
of temperature-controlled substrates
for hybrid Microcircuits"
pages 137—145**

Courier Press, Leamington Spa, England.

Dispositif de régulation thermique d'une enceinte, contenant
un cristal piézoélectrique oscillant

La présente invention concerne le domaine des dispositifs de chauffage avec régulation thermique d'un corps quelconque, et plus particulièrement d'enceintes contenant des dispositifs dont les caractéristiques de fonctionnement sont très sensibles aux variations de température.

Ces dispositifs sont notamment les oscillateurs électriques à cristaux piézoélectriques, qui doivent, dans la plus grande partie de leurs applications, être placés dans une enceinte à température régulée, qui les soustrait aux changements de la température extérieure.

Dans sa constitution générale, un dispositif de chauffage à régulation thermique comporte essentiellement trois parties:

—une source produisant de l'énergie calorifique, sous l'action d'un courant électrique, énergie appliquée au corps à chauffer;

—un circuit de réglage du courant électrique dans des limites données sous l'action d'une tension électrique de commande;

—un ou plusieurs organes de mesure de la température du corps à chauffer, délivrant la tension électrique de commande.

En fonctionnement, le circuit de réglage étant ajusté pour l'obtention d'une température désirée, toute variation de température accidentelle de l'enceinte provoque de la part des organes de mesure ou "capteurs de température" la production d'une tension électrique de commande qui, appliquée au circuit de réglage du courant électrique de la source d'énergie calorifique fait varier dans le sens convenable, la valeur de cette énergie.

Un dispositif de ce type est par exemple décrit dans la revue "Electronic Engineering, volume 46, No 557, juillet 1974—Applied ideas". Dans ce dispositif, un transistor de puissance est la source d'énergie calorifique. Ce transistor est commandé dans sa base par le signal délivré par un amplificateur opérationnel dont les entrées sont connectées respectivement aux deux extrémités de la diagonale d'un pont de résistances dont l'un des éléments est une thermistance. Suivant la tension délivrée par l'amplificateur opérationnel, le transistor de puissance est alternativement conducteur ou bloqué. Le transistor de puissance et la thermistance sont montés sur l'enceinte dont la température doit être régulée et à proximité l'un de l'autre.

Un tel dispositif présente cependant un certain nombre d'inconvénients: la présence d'un seul transistor pour assurer le chauffage de l'enceinte à réguler nécessite obligatoirement que celle-ci ait un volume qui ne soit pas supérieur à quelques cm3, en particulier lorsque cette régulation doit s'exercer dans une gamme de températures extérieures allant de —40°C à +70°C. Pour un volume plus important, onconstate en effet un manque d'homogénéité thermique du corps à chauffer, les parties de l'enceinte éloignées du transistor de puissance étant nécessairement à une température inférieure à celles qui sont situées à proximité de celui-ci.

Pour remédier partiellement à cet inconvénient, il a été proposé d'utiliser plusieurs transistors de chauffage. Un tel dispositif est par exemple décrit dans la revue "IEEE Transactions on Parts, Hybrids and Packing" volume PHP 10, No 2, pages 137 à 145, juin 1974, de H.N. Greenhouse et al intitulé "Design of temperature-controlled substrates for Hybrid Micro-Circuits". Dans le dispositif décrit en particulier sur la figure 9 de cette publication, le transistor de puissance et la résistance de base du circuit de la revue Electronic Engineering décrit plus haut ont été remplacés par deux transistors montés en série $Q_2$ et $Q_3$ destinés à chauffer l'enceinte dont la température doit être contrôlée. Toutefois, il est précisé que la thermistance $R_T$ présente dans le pont de mesure doit être aussi proche que possible des éléments chauffants, ce qui implique nécessairement que les éléments chauffants soient placés à proximité l'un de l'autre. Par conséquent, le volume de l'enceinte dont la température doit être régulée est nécessairement dans ce cas de faible volume également.

Par ailleurs, un tel système possède également l'inconvénient de ne pas permettre, en général, une dissipation thermique identique pour les deux transistors $Q_2$ et $Q_3$. Il n'y a équilibre des puissances dissipées qu'à la condition que la tension au point A du pont soit telle que les tensions collecteur-émetteur des transistors $Q_2$ et $Q_3$ soient égales. Ceci n'a lieu qu'à une température donnée. Par conséquent, dès que la température de l'enceinte s'écarte de cette température donnée, la puissance dissipée par les transistors $Q_2$ et $Q_3$ est différente. Un tel système manque donc également d'homogénéité thermique.

Un autre dispositif connu, pour assurer une bonne homogénéité thermique, fait appel à une pluralité de transistors répartis sur ou dans l'enceinte, connectés en parallèle sur la source d'alimentation, la régulation étant réalisée par action sur les bases de ces transistors également connectés en parallèle. Ce dispositif présente l'inconvénient de nécessiter d'une part un courant de commande de base multiplié par le nombre de transistors et d'autre part "d'appairer" les transistors pour qu'ils aient tous les mêmes caractéristiques.

Le dispositif, objet de la présente demande, permet d'éviter les inconvénients des dispositifs connus.

Selon l'invention, on réalise un dispositif de régulation thermique d'une enceinte, comprenant d'une part un circuit de mesure de température (A) et d'autre part un circuit de chauffage (B) de l'enceinte, alimenté par une source de tension ($V_a$) et contrôlé par le circuit de mesure de température (A), celui-ci étant constitué d'un pont de résistances ($R'_1$, $R'_2$, $R'_3$, $R'_4$) dont une branche comprend une pluralité d'éléments à résistance variable en fonction de la température ($R'_4$) et d'un circuit amplificateur (Z) délivrant, en fonction de la différence de potentiel existant entre les extrémités d'une des diagonales du pont, un signal de contrôle, caractérisé en ce que le circuit de chauffage est constitué par une pluralité de circuits semi-conducteurs stabilisateurs de tension comportant au moins un élément choisi parmi une diode, une diode Zener, un transistor, un circuit régulateur de tension série et/ou parallèle, chacun de ces circuits semi-conducteurs reliés en série étant soumis à une fraction sensiblement égale de la tension d'alimentation

$$\left( \frac{V_a}{n+1} \right)$$

et étant traversé par un courant de chauffage réglable par l'intermédiaire d'un transistor de commande ($T_c$) soumis audit signal de contrôle.

Un tel dispositif permet en effet de réaliser un chauffage homogène, à une température déterminée, d'une enceinte de dimensions quelconques sans nécessité d'appairer les circuits semi-conducteurs utilisés. En particulier, dans le cas d'un oscillateur piézoélectrique, un tel dispositif permet de conserver une fréquence donnée avec une précision relative de l'ordre de $10^{-9}$, pour des limites de température extérieure comprises entre $-40°C$ et $+70°C$. Le dispositif selon l'invention permet également de conserver une fréquence donnée avec une précision relative de l'ordre de $10^{-10}$ pour des écarts de tension de $\pm 10\%$.

De plus, le dispositif selon l'invention permet de contrôler le courant de chauffage et par conséquent la puissance dissipée dans les circuits semi-conducteurs stabilisateurs de tension à l'aide d'un transistor unique.

Par ailleurs, le transistor de commande peut également être fixé sur l'enceinte qu'il contribue à chauffer.

Tout circuit semi-conducteur stabilisateur de tension peut convenir dans le cardre de la présente invention. Par circuit stabilisateur de tension, on entend généralement un circuit dans lequel la tension de sortie de celui-ci est constante quelle que soit la tension d'entrée, à l'intérieur de certaines limites que l'homme de métier déterminera sans difficultés et qui dépendent essentiellement de la nature et de la valeur des éléments constituant ledit circuit semi-conducteur. De tels exemples de circuits stabilisateurs de tension sont décrits par exemple dans l'ouvrage de PASCOE "Fondamentals of solid-state Electronics" J. Wiley and Sons—1976, en particulier au chapitre 12 intitulé "Power supply regulation" pages 224 à 256. L'homme de l'art choisira le circuit stabilisateur de tension de telle sorte qu'il comporte au moins un élément choisi parmi une diode, une diode Zener, un transistor à effet de champ (en particulier due type MOS) ou bipolaire, un circuit régulateur de tension série et/ou parallèle, sous forme de composants discrets ou sous forme intégrée. En particulier, chaque circuit régulateur de tension peut être dans sa forme la plus simple une diode ou jonction semiconductrice connectée dans les sens direct, mais de préférence une diode Zener connectée par conséquent dans le sens inverse. Chaque diode aura des caractéristiques identiques pour respecter la chute de tension

$$\frac{V_a}{n+1}$$

à ses bornes. Toutefois, il sera préférable d'utiliser comme circuit stabilisateur de tension un circuit régulateur de tension parallèle ou série, tel que décrit dans l'ouvrage ci-dessus, sous forme de composants discrets ou intégrés. Dans ce dernier cas par exemple, on peut utiliser un régulateur de tension du type SFC 2723 tel que décrit dans le "note d'application technique" No 56—LR—129—de M. G. DECES publiée en septembre 1971 par la Société SES-COSEM.

Pour toute information complémentaire concernant les différents circuits stabilisateurs de tension, on pourra se reporter par exemple à l'ouvrage de MILLMAN et HALKIAS intitulé "Electronic devices and circuits" Mac Graw Hill—1967—ou à l'ouvrage de PASCOE, précédemment cité.

Selon un mode préférentiel de réalisation, le dispositif de régulation thermique selon l'invention est caractérisé en ce que chaque circuit semi-conducteur comporte un transistor ($T_n$) dont le potentiel de l'électrode de base est fixé par un pont diviseur constitué d'une résistance ($R_n$) et d'une diode Zener ($CR_n$), l'émetteur d'un transistor ($T_n$) étant relié au collecteur du transistor ($T_{n-1}$) du circuit semi-conducteur suivant.

Un tel circuit présente l'avantage d'être particulièrement simple à réaliser. Chaque transistor de la chaîne série est ainsi soumis à une fraction de la tension totale et à la totalité du courant de chauffage. Par conséquent, aucun "appairage" particulier des transistors n'est nécessaire.

Dans une forme particulière de réalisation de l'invention dans laquelle le circuit amplificateur (Z) est un amplificateur différentiel dont les deux entrées sont respectivement reliées aux deux extrémités de la diagonale du pont (X Y), le dispositif selon l'invention est caractérisé en ce que la borne de sortie (O) de l'amplificateur différentiel est reliée à la borne du transistor de commande ($T_c$) à travers un pont diviseur de résistances ($R_A$, $R_B$), abaissant sur ladite base la tension résiduelle de l'amplificateur (Z) à une valeur assurant le blocage du transistor de commande ($T_c$).

Afin de pouvoir choisir librement le gain de l'amplificateur différentiel tout en assurant un blocage complet du transistor de commande ($T_c$), il est prévu d'insérer une diode Zener (DZ) entre la sortie du pont diviseur ($R_A$, $R_B$) et la base du transistor de commande ($T_c$).

Il est également souhaitable d'éviter la détérioration des transistors de chauffage au cours du fonctionnement du dispositif selon l'invention. Dans ce but, il est également prévu un dispositif limiteur de courant (C) définissant le potentiel de base du transistor de commande ($T_c$), ledit dispositif limiteur étant constitué par un transistor ($T_L$) dont las base reçoit un signal lié au courant de chauffage et dont le collecteur est relié à une extrémité du pont diviseur de résistances. L'ajustement du signal lié au courant de chauffage sera réalisé de préférence à l'aide de la résistance d'émetteur du transistor de commande ($T_c$).

Afin d'assurer une meilleure homogénéité thermique du corps à chauffer, il est également prévu d'utiliser une pluralité d'éléments thermo-sensibles connectés en série, lesdits éléments ainsi que les circuits semi-conducteurs étant répartis dans une pluralité de régions de l'enceinte. Dans ce cas, on assorciera de préférence un élément thermo-sensible à chaque circuit semi-conducteur.

L'invention sera mieux comprise à l'aide de la description ci-après, en s'appuyant sur les dessins annexés, où:

—la figure 1 représente, suivant un dessin schématique, un mode de réalisation d'un dispositif de régulation thermique selon l'invention,

—la figure 2 représente, suivant un dessin schématique partiel, une variante de ce mode de réalisation,

—la figure 3 représente une autre variante préférée,

—la figure 4 représente une enceinte munie du dispositif de régulation selon l'invention.

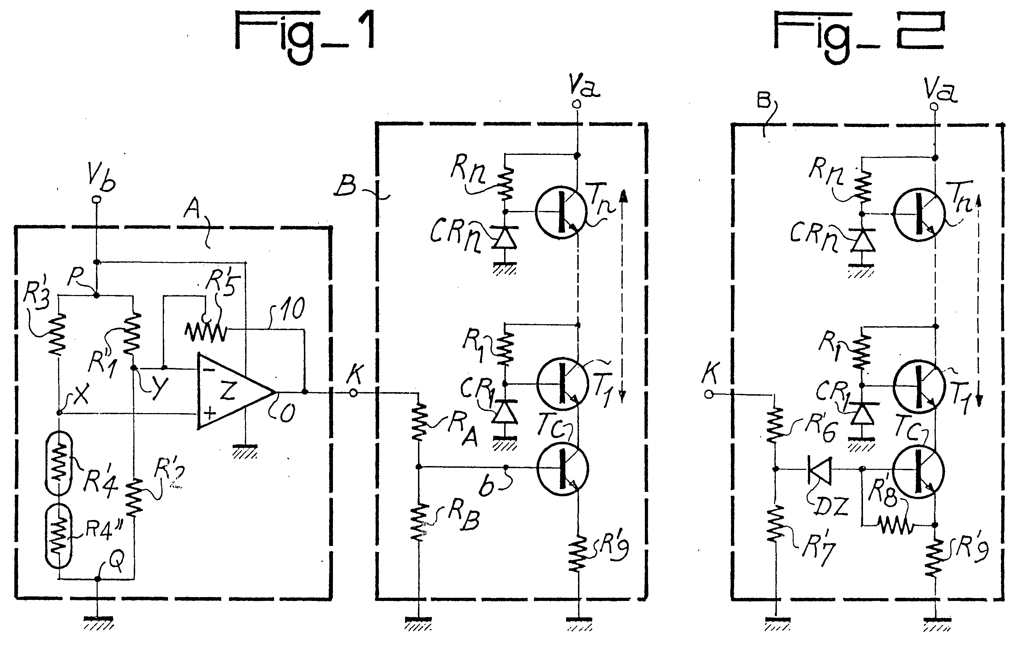

La figure 1 représente, suivant un dessin schématique, un mode de réalisation du dispositif de régulation thermique selon l'invention.

Il se compose d'un circuit de mesure de température, repéré A, et d'un circuit de chauffage, repéré B.

Le circuit de mesure A comporte un ou plusieurs éléments thermo-sensibles ou capteurs de température, connectés en série, tels que $R'_4$, $R''_4$. Ces capteurs sont inclus dans une des branches d'un pont de résistances, dont les autres éléments sont $R'_1$, $R'_2$, $R'_3$, alimenté en tension continue aux extrémités PQ d'une de ses diagonales.

Les extrémités de l'autre de ses diagonales XY sont reliées aux deux entrées d'un amplificateur différentiel Z, muni d'une boucle sortie-entrée 10 comprenant une résistance variable $R'_5$.

Le fonctionnement d'un tel circuit de mesure est le suivant:

Pour une température d'enceinte quelconque, les capteurs $R'_4$, $R''_4$ prennent une résistance donnée; le pont de résistance $R'_1$, $R'_2$, $R'_3$, $R'_4$, $R''_4$ n'est pas équilibré, et une tension apparaît aux extrémités XY; l'amplificateur différentiel Z, attaqué par cette tension délivre à sa sortie O un signal électrique ainsi lié à la température de l'enceinte, signal qui s'annule seulement pour une valeur particulière de cette température. Il est possible de prédéterminer cette valeur par ajustement de la valeur de la résistance $R'_2$; par ailleurs, la valeur absolue du signal délivré par le circuit de mesure peut être réglée par ajustement de la valeur de la résistance $R'_5$.

Le circuit de chauffage B comporte une chaîne de transistors connectés en série par leur émetteur et collecteur, repérés de $T_1$ à $T_n$.

Les transistors $T_1$ à $T_n$ sont montés en régulateurs de tension. Pour cela, chaque base est maintenue à un potentiel constant par un pont diviseur résistance-diode Zener tel que $R_n$, $CR_n$ pour le transistor $T_n$.

Il est d'ailleurs à remarquer que c'est la fonction "régulation de tension" qui est mise à contribution dans l'invention, et que tout circuit ou élément semi-conducteur assurant une telle fonction est compris dans le domaine de l'invention.

Le transistor $T_c$ assure la fonction de transistor de commande. Par suite de la fonction de stabilisation de tension assumée par chaque transistor de la chaîne, chacun des n+1 transistors $T_1 \ldots T_n$, $T_c$ est soumis à une fraction de la tension totale $V_A$, sensiblement

$$\frac{V_A}{n+1}$$

La base du transistor $T_c$ est reliée à la sortie de l'amplificateur différentiel à travers un pont diviseur $R_A$, $R_B$ dont le rôle est d'assurer une liaison tenant compte des conditions particulières de polarisation de l'amplificateur différentiel Z. En effet, cet amplificateur est alimenté sur le mode dit "en mono-tension"; il n'existe alors pas de tension de référence par rapport à laquelle il soit possible de bloquer le transistor $T_c$. L'utilisation d'un pont diviseur de rapport convenable permet de diminuer la tension résiduelle de sortie de l'amplificateur à son niveau bas, pour l'amener à une valeur inférieure à la tension de blocage de la base du transistor $T_c$.

La figure 2 représente un mode réalisation avantageux de la liaison entre l'amplificateur différentiel et le transistor de contrôle $T_c$. Le mode de liaison de la figure 1 présente en effet le désavantage de faire perdre une partie du gain de l'amplificateur dans le pont diviseur $R_A$—$R_B$, ce qui conduit à augmenter dans le rapport inverse le gain de l'amplificateur Z, avec la conséquence néfaste d'augmentation de la sensibilité du circuit aux variations de température et de la tension d'alimentation.

Le schéma de la figure 2 comporte l'insertion, dans la liaison, d'une diode Zener DZ. La tension d'avalanche de cette diode est choisie d'une valeur supérieure à la tension résiduelle de sortie de l'amplificateur différentiel à son niveau bas. Ce choix assure le blocage complet de la base du transistor $T_c$, donc du courant traversant l'ensemble de la chaîne des transistors, en sauvegardant un libre choix du gain de l'amplificateur différentiel.

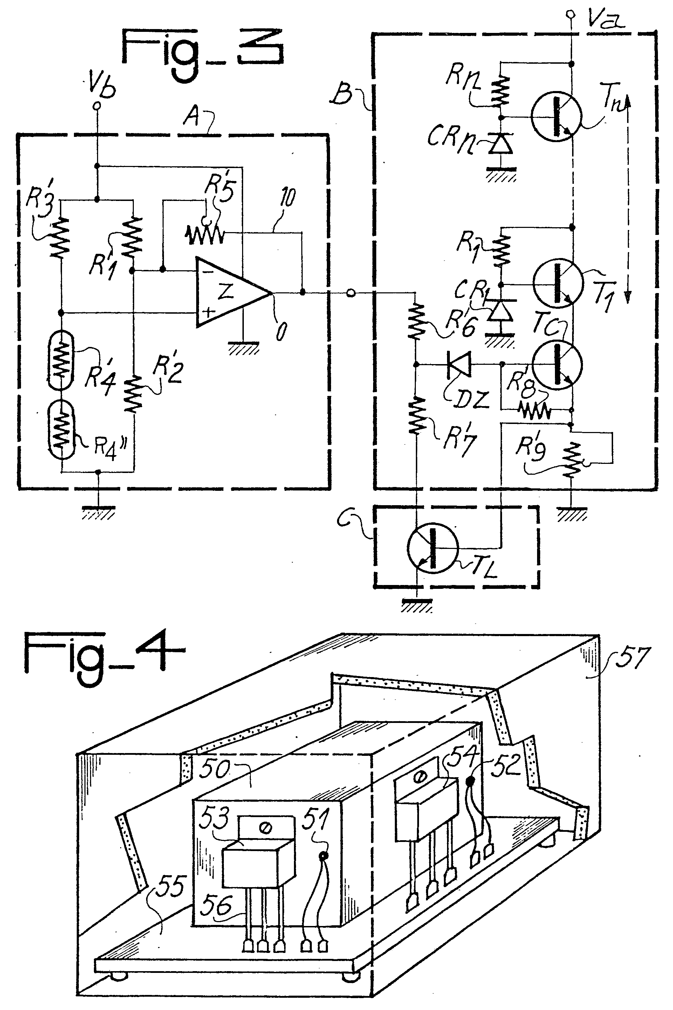

La figure 3 représente un circuit de chauffage selon l'invention, muni d'un dispositif de limitation du courant maximal traversant la chaîne des transistors $T_1$, $T_n$.

Deux solutions connues sont souvent utilisées pour réaliser une limitation du courant d'un transistor. L'une fait appel à une forte résistance d'émetteur, procurant un effet de contre-réaction. Cependant, il en résulte les inconvénients d'une perte sur la sensibilité, et d'une perte de puissance dans cette résistance. L'autre solution fait appel à un ajustement du courant sur la base du transistor. La résistance d'émetteur peut alors adopter une valeur plus modérée, mais d'autres inconvénients apparaissent, dans le cas du dispositif de l'invention:

—difficulté d'obtenir un courant défini de démarrage dans toute la gamma de températures,

—sensibilité, aux variations de tension d'alimentation du système de commande,

—sensibilité aux écarts des caractéristiques des transistors de chauffage.

Le circuit de limitation de courant de la figure 3 ne présente pas ces inconvénients. Il fait appel à un transistor amplificateur $T_L$, attaqué sur sa base par un signal lié au courant à limiter, et agissant, par son collecteur, sur la base du transistor $T_c$ de commande.

Le signal lié au courant est simplement prélevé sur la résistance d'émetteur du transistor de commande.

Les avantages d'un tel circuit limiteur sont les suivants:

—faible valeur de la résistance de contre-réaction $R_9$; d'où une sensibilité maximum et de faibles pertes dans cette résistance,

—stabilité de la valeur du courant de démarrage dans la gamme de températures,

—stabilité de ce courant en fonction de la tension d'alimentation du système de commande,

—insensibilité aux écarts des caractéristiques des transistors de chauffage.

La figure 4 représente un mode de mise en oeuvre pratique particulièrement simple du dispositif de régulation thermique selon l'invention, dans le cas, donné à titre d'exemple, de la régulation de la température d'un cristal piézo-électrique oscillant contenu dans une enceinte close; cette enceinte fait usuellement partie intégrante du produit fini, industriellement commercialisé sous ce nom, et c'est un des avantages de l'invention que de permettre de faire participer directement cette enceinte à la mise en oeuvre du dispositif de régulation.

Pour cela, les capteurs de température tels que 51 et 52 et les transistors de chauffage tels que 53 et 54 sont directement fixés sur l'enceinte étanche 50 contenant le cristal piézo-électrique. Par ailleurs, l'enceinte est montée directement sur le circuit de commande 55, qui sert ainsi de support, et est avantageusement réalisé suivant la technique des circuits imprimés.

Les connexions de raccordement 56 sont de cette façon très courtes. L'isolement thermique entre l'enceinte et la boîtier de protection extérieur tel que 57 peut être assuré soit par un matériau isotherme, soit simplement par la couche d'air ambiant, si l'ensemble est monté hermétiquement dans le boîtier.

La mise en oeuvre de l'invention apparaît ainsi comme extrêmement simple, par rapport aux réalisations connues compliquées, où des fils résistants, chauffés par effet Joule, devaient être bobinés sur un boîtier auxiliaire, rendu ensuite solidaire de l'enceinte à chauffer, et où, de plus, les circuits électroniques de commande devaient être inclus à l'intérieur de l'enceinte pour bénéficier de la régulation thermique de celle-ci et n'apporter ainsi eux-mêmes qu'une variation thermique minimale.

Suivant des ordres de grandeur donnés à titre d'exemple, le dispositif de régulation thermique de l'invention procure, par rapport à un dispositif du type précédent, les résultats très avantageux suivants:

Entre —40° et +70°C, la variation relative de la fréquence

$$\frac{\Delta F}{F}$$

d'un cristal piézo-électrique donné passe de 1,6 $10^{-8}$ à $10^{-9}$, et, pour une variation de $\pm 10\%$ de la tension d'alimentation du dispositif de régulation, est près de trois fois plus faible.

**Revendications**

1. Dispositif de régulation thermique d'une enceinte, comprenant d'une part un circuit de mesure de température (A) et d'autre part un circuit de chauffage (B) de l'enceinte, alimenté par une source de tension $(V_a)$ et contrôlé par le circuit de mesure de température (A), celui-ci étant constitué d'un pont de résistances $(R'_1, R'_2, R'_3, R'_4)$ dont une branche comprend une pluralité d'éléments à résistance variable en fonction de la température $(R'_4)$, et d'un circuit amplificateur (Z) délivrant, en fonction de la différence de potentiel existant entre les extrémités d'une des diagonales du pont, un signal de contrôle, caractérisé en ce que le circuit de chauffage (B) est constitué par une pluralité de circuits semi-conducteurs stabilisateurs de tension comportant au moins un élément choisi parmi une diode une diode Zener, un transistor, un circuit régulateur de tension série et/ou parallèle, chacun de ces circuits semi-conducteurs reliés en série étant soumis à une fraction sensiblement égale de la tension d'alimentation

$$(\frac{V_a}{n+1})$$

et étant traversé par un courant de chauffage réglable par l'intermédiaire d'un transistor de commande ($T_c$) soumis audit signal de sortie.

2. Dispositif de régulation thermique selon la revendication 1, caractérisé en ce que chaque circuit semi-conducteur comporte un transistor ($T_n$) dont le potentiel de l'électrode de base est fixé par un pont diviseur constitué d'une résistance ($R_n$) et d'une diode Zener ($CR_n$), l'émetteur d'un transistor ($T_n$) étant relié au collecteur du transistor ($T_{n-1}$) du circuit semi-conducteur suivant.

3. Dispositif de régulation thermique selon la revendication 1 ou 2, dans lequel le circuit amplificateur (Z) est un amplificateur différentiel dont les deux entrées sont respectivement reliées aux deux extrémités de la diagonale du pont (XY), caractérisé en ce que la borne de sortie (O) de l'amplificateur différentiel est reliée à la base du transistor de commande ($T_c$) à travers un pont diviseur de résistances ($R_A$, $R_B$), abaissant sur ladite base la tension résiduelle de l'amplificateur (Z) à une valeur assurant le blocage du transistor de commande ($T_c$).

4. Dispositif de régulation thermique selon la revendication 3, caractérisé en ce qu'une diode Zener (DZ) est insérée entre la sortie du pont diviseur ($R_A$, $R_B$) et la base du transistor de commande ($T_c$).

5. Dispositif de régulation thermique selon l'une des revendications 3 ou 4, caractérisé en ce qu'il comporte en outre un dispositif limiteur de courant (C), définissant le potentiel de la base du transistor de commande ($T_c$), ledit dispositif limiteur (C) étant constitué par un transistor ($T_L$) dont las base reçoit un signal lié au courant de chauffage et dont le collecteur est relié à une extrémité du pont diviseur de résistances ($R_A$, $R_B$).

6. Dispositif de régulation thermique selon la revendication 5, caractérisé en ce que le signal lié au courant de chauffage est ajusté à l'aide de la résistance d'émetteur ($R'_9$) du transistor de commande ($T_c$).

7. Dispositif de régulation thermique selon l'une des revendications 1 à 6, caractérisé en ce que les circuits semi-conducteurs et les éléments thermo-sensibles ($R'_4$, $R''_4$) sont répartis dans une pluralité de régions de l'enceinte.

8. Dispositif de régulation thermique selon la revendication 7, caractérisé en ce qu'un élément thermo-sensible est associé à chaque circuit semi-conducteur.

9. Utilisation du dispositif selon l'une des revendications précédentes pour la régulation thermique d'une enceinte contenant un cristal piézo-électrique oscillant.

## Claims

1. Device for temperature regulation of a housing, comprising a temperature measurement circuit (A) on the one hand, a heating circuit (B) of the housing on the other hand, supplied by a voltage source ($V_a$) and controlled by the temperature measurement circuit (A), the latter being formed by a resistor bridge ($R'_1$, $R'_2$, $R'_3$, $R'_4$) one branch of which comprises a plurality of elements ($R'_4$) having temperature depending variable resistance, and an amplifier circuit (Z) delivering a control signal depending on the potential difference existing between the ends of one of the bridge diagonals, characterized in that the heating circuit (B) is formed by a plurality of voltage regulator semiconductor circuits comprising at least one element selected among a diode, a zener diode, a transistor, a serial and/or parallel voltage regulator circuit, each of these series-connected semiconductor circuits being subject to a substantially identical fraction ($V_a/n+1$) of the supply voltage and being traversed by a heating current adapted to be regulated by a control transistor ($T_c$) subject to said output signal.

2. Device for temperature regulation in accordance with claim 1, characterized in that each semiconductor circuit comprises a transistor ($T_n$) the base electrode potential of which is fixed by a divider bridge formed by a resistor ($R_n$) and a zener diode ($CR_n$), the emitter of a transistor ($T_n$) being connected with the collector of the transistor ($T_n-1$) of the following semiconductor circuit.

3. Device for temperature regulation in accordance with claim 1 or 2, in which the amplifying circuit (Z) is a differential amplifier the two inputs of which are respectively connected with two ends of the diagonal of the bridge (XY), characterized in that the output terminal (O) of the differential amplifier is connected to the base of the control transistor ($T_c$) through a resistive divider bridge ($R_A$, $R_B$) reducing on said base the residual voltage of the amplifier (Z) to a value assuring blocking of the control transistor ($T_c$).

4. Device for temperature regulation in accordance with claim 3, characterized in that a zener diode (DZ) is inserted between the output of the divider bridge ($R_A$, $R_B$) and the base of the control transistor ($T_c$).

5. Device for temperature regulation in accordance with claims 3 or 4, characterized in that it further comprises a current limiting device (C) defining the base potential of the control transistor ($T_c$), said limiting device (C) being formed by a transistor ($T_L$) the base of which receives a signal depending on the heating current, and the collector of which is connected to one terminal of the resistive divider bridge ($R_A$, $R_B$).

6. Device for temperature regulation in accordance with claim 5, characterized in that the signal depending on the heating current is adjusted by the emitter resistor ($R'_9$) of the control transistor ($T_c$).

7. Device for temperature regulation in accordance with any of claims 1 to 6, characterized in that the semiconductor circuits and the temperature sensitive elements ($R'_4$, $R''_4$) are distributed in a plurality of regions of the housing.

8. Device for temperature regulation in accordance with claim 7, characterized in that one temperature sensitive element is associated with each semiconductor circuit.

9. Use of the device in accordance with any of the preceding claims for temperature regulation of a housing containing an oscillating piezoelectric cristal.

**Patentansprüche**

1. Vorrichtung zur Temperaturregelung eines Gehäuses, mit einer Temperaturmeßschaltung (A) einerseits und einer Gehäuseheizschaltung (B) andererseits, die von einer Spannungsquelle ($V_a$) gespeist und von der Temperaturmeßschaltung (A) gesteuert wird, wobei diese gebildet ist aus einer Widerstandsbrücke ($R'_1$, $R'_2$, $R'_3$, $R'_4$), wovon ein Zweig eine Mehrzahl von Elementen ($R'_4$) mit temperaturabhängig variablem Widerstand umfaßt, und aus einer Verstärkerschaltung (Z), die in Abhängigkeit von der Potentialdifferenz zwischen den Enden einer Diagonale der Brücke ein Steuersignal abgibt, dadurch gekennzeichnet, daß die Heizschaltung (B) gebildet ist aus einer Mehrzahl von spannungsstabilisierenden Halbleiterschaltungen, die wenigstens ein Element enthalten, das ausgewählt ist zwischen einer Diode, einer Zenerdiode, einem Transistor, einem Serien- und/oder Parallel-Spannungsregulierkreis, wobei auf jede dieser in Reihe geschalteten Halbleiterschaltungen ein im wesentlichen; gleicher Bruchteil ($V_a$/n+1) der Versorgungsspannung einwirkt und jede derselben von einem Heizstrom durchquert wird, der durch einen Steuertransistor ($T_c$), auf den das Ausgangssignal einwirkt, regulierbar ist.

2. Vorrichtung zur Temperaturregelung nach Anspruch 1, dadurch gekennzeichnet, daß jede Halbleiterschaltung einen Transistor ($T_n$) umfaßt, bei dem das Potential der Basiselektrode durch eine Teilerbrücke festgelegt ist, die aus einem Widerstand ($R_n$) und einer Zenerdiode ($CR_n$) gebildet ist, wobei der Emitter eines Transistors ($T_n$) mit dem Kollektor des Transistors ($T_n$–1) der darauffolgenden Halbleiterschaltung verbunden ist.

3. Vorrichtung zur Temperaturregelung nach Anspruch 1 oder 2, bei welcher die Verstärkerschaltung (Z) ein Differentialverstärker ist, dessen zwei Eingänge mit dem einem bzw. anderen Ende der Diagonale der Brücke (XY) verbunden sind, dadurch gekennzeichnet, daß der Ausgangsanschluß, (O) des Differential-verstärkers mit der Basis des Steuertransistors ($T_c$) über eine Widerstands-Teilerbrücke ($R_A$, $R_B$) verbunden ist, welche an dieser Basis die Restspannung des Verstärkers (Z) auf einen Wert absenkt, der die Sperrung des Steuertransistors ($T_c$) gewährleistet.

4. Vorrichtung zur Temperaturregelung nach Anspruch 3, dadurch gekennzeichnet, daß eine Zenerdiode (DZ) zwischen den Ausgang der Teilerbrücke ($R_A$, $R_B$) und die Basis des Steuertransistors ($T_c$) eingefügt ist.

5. Vorrichtung zur Temperaturregelung nach Anspruch 3 oder 4, dadurch gekennzeichnet, daß sie ferner eine Strombegrenzervorrichtung (C) unfaßt, welche das Basispotential des Steuertransistors ($T_c$) definiert, wobei die Begrenzervorrichtung (C) aus einem Transistor ($T_L$) gebildet ist, dessen Basis ein Signal empfängt, das mit dem Heizstrom verknüpt ist, ·und dessen Kollektor mit einem Ende der resistiven Teilerbrücke ($R_A$, $R_B$) verbunden ist.

6. Vorrichtung zur Temperaturregelung nach Anspruch 5, dadurch gekennzeichnet, daß das mit dem Heizstrom verknüpfte Signal mittels des Emitterwiderstandes ($R'_9$) des Steuertransistors ($T_c$) eingestellt wird.

7. Vorrichtung zur Temperaturregelung nach einem der Ansprüche 1 bis 6, dadurch gekennzeichnet, daß die Halbleiterschaltungen und die temperaturempfindlichen Elemente ($R'_4$, $R''_4$) in einer Mehrzahl von Bereichen des Gehäuses verteilt sind.

8. Vorrichtung zur Temperaturregelung nach Anspruch 7, dadurch gekennzeichnet, daß ein temperaturempfindliches Element jeder Halbleiterschaltung zugeordnet ist.

9. Verwendung der Vorrichtung nach einem der vorstehenden Ansprüche zur Temperaturregelung eines Gehäuses, das einen oszillierenden piezoelektrischen Kristall ent-hält.

Fig_1

Fig_2

0 004 233

Fig_3

Fig_4